# EUROPÄISCHE PATENTSCHRIFT

(11) **EP 1 125 499 B1**
(45) Veröffentlichungstag und Bekanntmachung des Hinweises auf die Patenterteilung: **17.12.2003**
(21) Anmeldenummer: 00103278.8
(22) Anmeldetag: 17.02.2000
(51) Int. Cl.: A21C 11/02, A21C 11/14

(54) **Andrück-und Stüpfelvorrichtung für einen Teigling**
Pressing and embossing apparatus for a dough piece
Dispositif de pressage et gaufrage d'un pâton

(43) Veröffentlichungstag der Anmeldung: 22.08.2001
(73) Patentinhaber: Weiss, Geerd, 64665 Alsbach-Hähnlein (DE)
(72) Erfinder: Weiss, Geerd, 64665 Alsbach-Hähnlein (DE)
(74) Vertreter: Zinngrebe, Horst, Dr.rer.nat.

(56) Entgegenhaltungen:
- DE-A- 2 601 219
- DE-C- 452 212
- DE-C- 3 608 331
- DE-U- 29 713 287
- FR-A- 2 646 992
- US-A- 2 431 789

## Beschreibung

Die Erfindung betrifft eine Andrück- und Stüpfelvorrichtung für einen Teigling, mit einem vertikal verfahrbaren Formwerkzeugträger und einer unter dem Formwerkzeugträger angeordneten Transporteinrichtung, an der mehrere Trögel in Transportrichtung hintereinander befestigt sind, wobei jeder Trögel mindestens eine zur Aufnahme des Teiglings geeignete Tasse aufweist.
Eine solche Vorrichtung ist aus der DE-A-29713287 bekannt.

Diese Vorrichtung kann Teil einer Anlage zum Herstellen von Formgebäck sein, beispielsweise in Form von Kaiserbrötchen, Schnittbrötchen, Zopfware oder andere durch Pressen oder Stempeleinprägungen verschönerten Backwaren. Dabei ist es erforderlich, für jede Form der gewünschten Brötchen ein eigenes, die Gestalt seiner Oberseite bestimmendes Andrück- oder Stüpfelwerkzeug sowie meist auch eine spezielle Tasse einzusetzen, die einen Teigling der notwendigen Größe aufnehmen kann.

Um mit der eingangs beschriebenen Vorrichtung mehrere unterschiedliche Backwaren herstellen zu können, kann man den Trögel im Querschnitt drei- oder vierseitig gestalten und in der Transporteinrichtung um seine Längsachse drehbar lagern, wobei jede Trögelseite eine andere Tassenform aufweist. Zum Übergang von einer Brötchenart auf eine andere muß dann der Trögel um seine Längsachse entsprechend gewendet werden. Eine derartige Gestaltung der Vorrichtung ist jedoch aufwendig und schwerfällig.

Demgegenüber liegt der Erfindung die Aufgabe zugrunde, die Umstellung der Vorrichtung von der Herstellung einer Brötchenart auf eine andere zu vereinfachen.

Dazu ist bei der eingangs genannten Vorrichtung erfindungsgemäß vorgesehen, daß an der Transporteinrichtung mehrere Trögelhalter in Transportrichtung hintereinander befestigt sind und jeder Trögelhalter eine Führung zum Einführen und Halten eines Trögels aufweist. Für die genannte Umstellung ist eine Umrüstung der erfindungsgemäßen Vorrichtung nicht mehr notwendig, weil es genügt, die vorhandenen gegen die passenden Trögel durch seitliches Einschieben oder Aufstecken von oben in die Trögelhalter auszutauschen. Mit der Vorrichtung läßt sich also eine unbegrenzte Zahl von Variationen an herzustellenden Backwaren verwirklichen, ohne daß die Vorrichtung selbst verändert werden muß.

Als Weiterbildung der Erfindung empfiehlt sich eine wannenförmige Gestalt des wenigstens an einer Seite offenen Trögelhalters, wobei gegenüberliegende Seitenwangen des Trögelhalters als Führung und Halterung für den Trögel dienen. Weiter ist zweckmäßig, am Boden des Trögelhalters eine langgestreckte Führungsschiene von bevorzugt Schwalbenschwanzprofil für den Trögel vorzusehen, wobei der Trögelboden ein der Führungsschiene angepaßtes Gegenprofil aufweist. Der Trögelwechsel wird gegen Fehler gesichert, wenn in Fortführung der Erfindung der Trögel eine die Form seiner Tasse(n) identifizierende Kennung beispielsweise in Form eines Balkencodes oder eines entsprechenden mechanischen Profils aufweist und jedes für die Tassenform geeignete Andrück- und/oder Stüpfelwerkzeug mit der gleichen Kennung versehen ist. Ist die Vorrichtung mit einer die Bewegung des Formwerkzeugträgers steuernden elektrischer oder elektronischen Steuerung ausgerüstet oder koppelbar, empfiehlt es sich weiterhin, einen ersten Fühler zur Erfassung der Trögelkennung mit der Steuerung zu koppeln und an dem Trögelhalter anzuordnen sowie einen zweiten Fühler zur Erfassung der Kennung am Andrück- und/oder Stüpfelwerkzeug mit der Steuerung zu koppeln und am Formwerkzeugträger anzuordnen. Im übrigen ist es für die Erfindung zweckmäßig, wenn der Formwerkzeugträger eine Aufnahme zum auswechselbaren Halten eines Andrückund/oder Stüpfelwerkzeugs hat.

Die Erfindung wird nachstehend unter Bezugnahme auf die in der beigefügten Zeichnung dargestellten Ausführungsbeispiele beschrieben. Es zeigen:
- Fig. 1: eine schematische Darstellung einer Andrück- und Stüpfelvorrichtung mit Transporteinrichtung, sowie
- Fig. 2-4: je eine schematische Darstellung des Zusammenwirkens von speziellen Trögelformen mit zugehörigen Trögelhaltern.

An einem nicht dargestellten Rahmenwerk ist ein Formwerkzeugträger 1 über einer Transporteinrichtung 2 befestigt und weist einen seitlich abstehenden Arm 3 auf Der Formwerkzeugträger 1 mit Arm 3 ist durch einen nicht dargestellten Antrieb im Takt von der eingezeichneten Ruhelage aus abwärts in Arbeitsposition und anschließend aufwärts bewegbar. In der Nähe seines freien Endes trägt der Arm 3 ein Andrückwerkzeug 4 sowie daneben eine Aufnahme 5 für ein Stüpfelwerkzeug 6. Die Aufnahme ist hier vereinfacht als ein Paar gegenüberliegender, am Arm 3 befestigter Winkelschienen 7, 8 angedeutet, in welche zwei seitlich vom Korpus 13 des Stüpfelwerkzeugs 6 abstehende Leisten 9, 11 bis zu einem nicht dargestellten Anschlag seitlich eingeschoben werden können. Aus der Oberseite des Korpus 13 steht ein Kennungsstift 14 nach oben vor, der genau in eine am Arm 3 vorgesehene Kennungsnut 16 paßt und dort beispielsweise einen elektrischen Kontakt betätigen kann, wenn das Stüpfelwerkzeug 6 in die Aufnahme 5 bis zum Anschlag eingeschoben worden ist.

Man sieht leicht, daß das Stüpfelwerkzeug 6, das hier mit einer kegeligen Spitze 15 zum Einwirken auf einen Teigling versehen ist, durch ein anderes Stüpfelwerkzeug beispielsweise mit einer spiraligen Spitze ersetzt werden kann, indem das Stüpfelwerkzeug aus der Aufnahme herausgezogen und das andere Stüpfelwerkzeug in die Aufnahme eingeschoben wird. Das andere Stüpfelwerkzeug ist mit einem Kennungsstift versehen, der etwa in die Kennungsnut 17 paßt und dort einen anderen elektrischen Schalter betätigen kann, wenn das andere Stüpfelwerkzeug ganz bis zum Anschlag eingeschoben ist. Eine dritte Kennungsnut 18 neben der Kennungsnut 16 ist noch für ein weiteres Stüpfelwerkzeug etwa mit zopfartiger Spitze vorgesehen, dessen Kennungsstift in die Kennungsnut 18 paßt. Selbstverständlich kommen auch Stüpfelwerkzeuge in Betracht, die mit zwei oder mehreren Kennungsstiften ausgerüstet sind, die in zwei oder alle drei der Kennungsnuten 16, 17,18 passen.

Die Transporteinrichtung 2 weist eine um zwei Rollen 21, 22 umlaufende endlose Förderkette 23 auf, wobei eine der Rollen in Uhrzeigerrichtung angetrieben ist. Auf der Förderkette 23 sind in Transportrichtung, die für das obere Trum hier von links nach rechts weist, mehrere Trögelhalter befestigt, von denen die während des dargestellten Betriebszustandes der Förderkette 23 auf dem oberen Trum befindlichen mit 26, 27, 28 bezeichnet und mit Trögeln 45 bestückt sind. Die übrigen Trögelhalter sind zwar leer dargestellt, können jedoch auch mit Teiglingen bestückt sein. Wie dargestellt ist die Transporteinrichtung 2 so unter dem Formwerkzeugträger 1 angeordnet, daß das obere Trum 29 der Förderkette 23 mit vertikalem Abstand unter dem Andrückwerkzeug 4 und anschließend unter dem Stüpfelwerkzeug 6 vorbeiläuft.

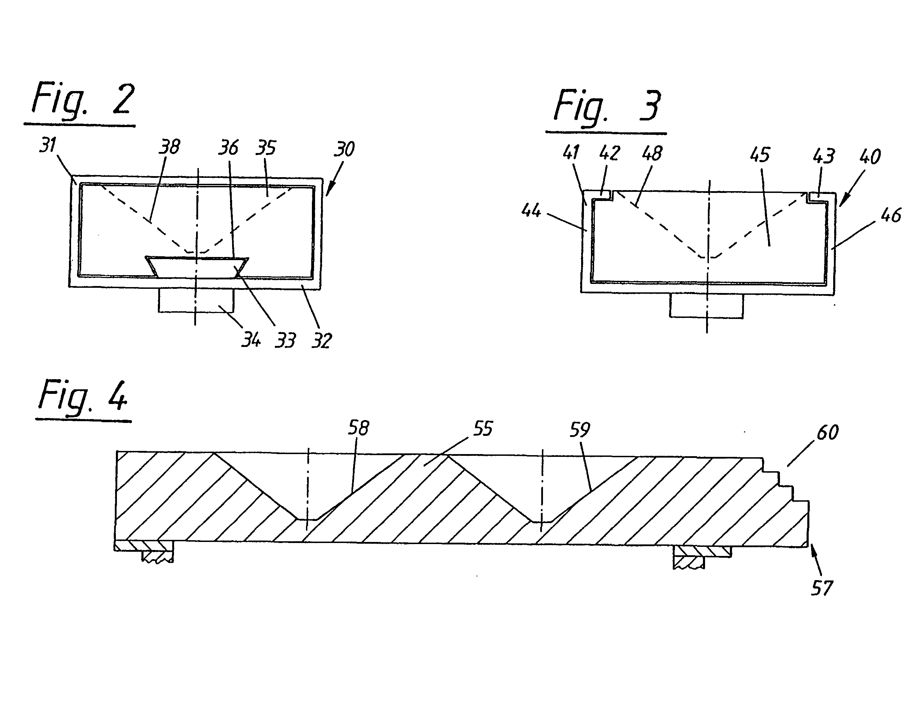

Der Trögelhalter 30 nach Figur 2 weist quer zur Transportrichtung einen vorderen und einen hinteren rechteckigen Rahmen auf, von denen der vordere Rahmen 31 zu erkennen ist. Längs der Trögelhalterbodens 32 erstreckt sich in Längsrichtung des Trögelhalters 30 eine schwalbenschwanzförmige erhabene Führungsleiste 33. Ferner besitzt der Trögelhalter einen unteren Ansatz 34, mit welchem er an der Förderkette 23 befestift ist. Vorne und hinten ist der Trögelhalter 30 offen. Daher kann in den Trögelhalter 30 seitlich ein Trögel 35 eingeschoben werden, welcher an seinem Boden eine der Führungsleiste 33 angepaßte schwalbenschwanzförmige Längsnut 36 aufweist. Höhe und Breite des Trögels 35 sind so bemessen, daß der Trögel 35 durch den Rahmen 31 hindurchgeschoben werden kann, der ihn gleichzeitig gegen Herausfallen aus dem Trögelhalter 30 sichert, wenn letzterer vom oberen Trum 29 sich zum unteren Trum um seine Längsachse wendet. Der Trögel besitzt mehrere, beispielsweise 8 oder mehr in Längsrichtung des Trögelhalters 30 beabstandete Tassen 38, von denen eine gestrichelt angedeutet ist

Der Trögelhalter 40 nach Figur 3 umschließt einen in ihn seitlich eingesetzten Trögel 45 seitlich und am Boden mit einem oben im wesentlichen offenen Rahmen 41. Der Rahmen 41 besitzt oben einwärts gerichtete Leisten 42, 43, mit welchen er den Trögel 45 seitlich übergreift. Die Seitenwangen 44, 46 des Rahmens dienen hier als Führung für den einzuschiebenden Trögel 45 anstelle der Schwalbenschwanzleiste 33 bei dem vorstehend beschrieben Beispiel. Die Tasse 48 des Trögels 45 ist wieder gestrichelt eingezeichnet.

Der in Figur 3 in Seitenansicht dargestellte Trögel 55 unterscheidet sich von den vorstehend erläuterten Trögeln 35, 45 unter anderem dadurch, daß er zwei quer zur Transportrichtung hintereinander angeordnete Tassen 58, 59 besitzt. Ferner ist an der Außenseite 57 des Trögels 55 eine meachanische, stufenförmige Kennung 60 ausgebildet, die durch einen nicht dargestellten Fühler abgetastet werden kann und für die Tassenform und -anordnung auf dem Trögel 55 charakteristisch ist.

Nicht dargestellt ist eine elektronische Steuerung für die Auf- und Abbewegungen des Formwerkzeugträgers 1 mit an ihm befestigten Andrückwerkzeug 4 und Stüpfelwerkzeug 6. Eingangsseitig sind an diese Steuerung der vorstehend erwähnte Fühler zum Abtasten der Trögelkennung 60 sowie die Schalter an den Kennungsnuten 16, 17 und 18, die in ihrer Funktion als werkzeugseitiger Fühler wirken, angeschlossen. Wenn eine in der Steuerung enthaltene Vergleichseinrichtung Gleichheit der vom Fühler ankommenden Signale mit den aus den Schaltern ankommenden Signalen feststellt, gibt sie die Aktivierung des Antriebs für den Formwerkzeugträger 1 frei, der daraufhin einen Bewegungszyklus in Form einer Abwärts- und anschließenden Aufwärtsfahrt durchlaufen kann.

In einer anderen, nicht dargestellten Ausführungsform der Erfindung kann jeder Trögel von oben in einen mit einer Klemmvorrichtung versehenen Trögelhalter eingesetzt werden, die den Trögel gegen Herausfallen sichert.

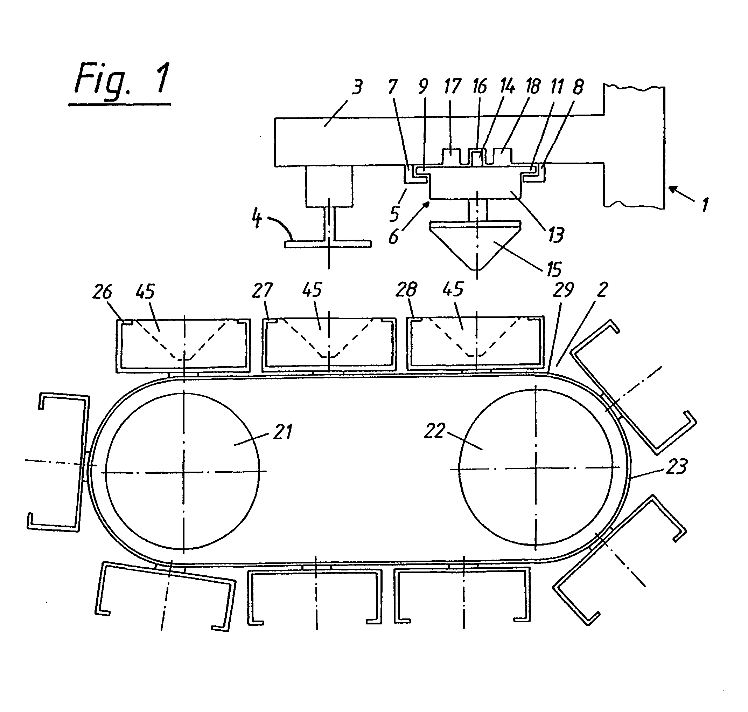

Ist die beschriebene Vorrichtung in eine Anlage zum Herstellen von Formgebäck integriert, befindet sich in Figur 1 linker Hand ein Vorgärschrank, aus dem die vorgegärten Teiglinge in die Tasse(n) eines bereitgehaltenen Trögels ausgegeben werden. Die durch die beschriebene Vorrichtung bearbeiteten Teiglinge werden anschließend aus den Trögeln auf ein Förderband abgeworfen, welches sie einem Nachgärschrank (rechter Hand in Figur 1) zuführt.

## Patentansprüche

1. Andrück- und Stüpfelvorrichtung für einen Teigling mit einem vertikal verfahrbaren Formwerkzeugträger (1) und einer unter dem Formwerkzeugträger angeordneten Transporteinrichtung (2), an der mehrere Trögel (35, 45, 55) in Transportrichtung hintereinander befestigt sind, wobei jeder Trögel mindestens eine zur Aufnahme des Teiglings geeignete Tasse (38, 48, 58, 59) aufweist, **dadurch gekennzeichnet, daß** an der Transporteinrichtung mehrere Trögelhalter (26, 27, 28; 30, 40) befestigt sind und jeder Trögelhalter eine Führung (33, 44, 46) zum Einführen und Halten eines gewünschten Trögels besitzt.

2. Vorrichtung nach Anspruch 1, **dadurch gekennzeichnet, daß** die Führung sich quer zur Transportrichtung erstreckt.

3. Vorrichtung nach Anspruch 1 oder 2, **dadurch gekennzeichnet, daß** der Trögel seitlich in die Führung einschiebbar ist.

4. Vorrichtung nach Anspruch 1 oder 2, **dadurch gekennzeichnet, daß** der Trögel von oben in die Führung einsteckbar ist.

5. Vorrichtung nach einem der vorstehenden Ansprüche, **dadurch gekennzeichnet, daß** der an wenigstens einer Seite offene Trögelhalter wannenförmig ausgebildet ist, wobei gegenüberliegende Seitenwangen des Trögelhalters als Führung und Halterung für den Trögel dienen.

6. Vorrichtung nach einem der vorstehenden Ansprüche, **dadurch gekennzeichnet, daß** bevorzugt am Boden des Trögelhalters eine langgestreckte Führungsschiene für den Trögel angeordnet ist, wobei der Trögelboden ein der Führungsschiene angepaßtes Gegenprofil aufweist.

7. Vorrichtung nach Anspruch 6, **dadurch gekennzeichnet, daß** die Führungsschiene ein schwalbenschwanzförmiges Querschnittsprofil hat.

8. Vorrichtung nach einem der vorstehenden Ansprüche, **dadurch gekennzeichnet, daß** der Trögel eine die Form seiner Tasse identifizierende Kennung (60) aufweist und daß jedes für die Tasse geeignete Stanz- oder Stüpfelwerkzeug mit der gleichen Kennung versehen ist.

9. Vorrichtung nach Anspruch 8 mit einer die Bewegung des Formwerkzeugträgers (1) steuernden elektronischen Steuerung, **gekennzeichnet durch** einen ersten mit der Steuerung gekoppelten und an dem Trögelhalter angeordneten Fühler zur Erfassung der Trögelkennung sowie **durch** einen zweiten am Formwerkzeugträger angeordneten und mit der Steuerung gekoppelten Fühler zur Erfassung der Kennung am Stanz- oder Stüpfelwerkzeug.

10. Vorrichtung nach einem der vorstehenden Ansprüche, **dadurch gekennzeichnet, daß** der Formwerkzeugträger eine Aufnahme zum auswechselbaren Halten eines Andrück- oder Stüpfelwerkzeugs hat.

## Claims

1. Pressing and embossing apparatus for a dough piece, with a forming tool carrier (1) that can be moved vertically, and a conveyor device (2) which is arranged below the forming tool carrier and which has several pans (35, 45, 55) fastened to it one behind the other in the direction of transportation, wherein each pan has at least one cup (38, 48, 58, 59) suitable for accommodating the dough piece,
**characterised in that**
several pan holders (26, 27, 28; 30, 40) are fastened to the conveyor device and each pan holder has a guide (33, 44, 46) for the insertion and holding of a desired pan.

2. Apparatus in accordance with claim 1, **characterised in that** the guide extends crosswise to the direction of transportation.

3. Apparatus in accordance with claim 1 or 2, **characterised in that** the pan can be pushed into the guide from the side.

4. Apparatus in accordance with claim 1 or 2, **characterised in that** the pan can be inserted into the guide from above.

5. Apparatus in accordance with one of the preceding claims, **characterised in that** the pan holder, which is open on at least one side, is designed in the shape of a trough, wherein opposite side faces of the pan holder serve as guide and holder for the pan.

6. Apparatus in accordance with one of the preceding claims, **characterised in that** a long extended guide rail for the pan is arranged preferably on the base of the pan holder, with the pan base having a counter-profile adapted to the guide rail.

7. Apparatus in accordance with claim 6, **characterised in that** the guide rail has a cross section in the shape of a swallow tail.

8. Apparatus in accordance with one of the preceding claims, **characterised in that** the pan has an identification mark (60) that identifies the shape of its cup, and that each punching or embossing tool that is suitable for the cup is equipped with the same identification marking.

9. Apparatus in accordance with claim 8, with an electronic control unit that controls the movement of the forming tool carrier (1), **characterised by** a first probe coupled to the control unit and arranged on the pan holder, for detecting the pan identification mark, as well as by a second probe arranged on the forming tool carrier and coupled to the control unit, for detecting the identification mark on the punching or embossing tool.

10. Apparatus in accordance with one of the preceding claims, **characterised in that** the forming tool carrier has a seat for holding a pressing and embossing tool in such a way that it can be exchanged.

## Revendications

1. Dispositif de pressage et de gaufrage pour pâton, lequel comporte un support d'outil de formage (1) pouvant être déplacé verticalement ainsi qu'une installation de transport (2), disposée sous le support d'outil de formage, sur laquelle plusieurs augets (35, 45, 55) sont fixés les uns derrière les autres dans la direction de transport, chaque auget comportant au moins une tasse appropriée (38, 48, 58, 59) servant à recevoir le pâton, **caractérisé en ce que** plusieurs supports d'auget (26, 27, 28 ; 30, 40) sont fixés sur l'installation de transport et **en ce que** chaque support d'auget possède un guide (33, 44, 46) servant à la mise en place et au maintien d'un auget de son choix.

2. Dispositif selon la revendication 1, **caractérisé en ce que** le guide s'étend transversalement à la direction de transport.

3. Dispositif selon la revendication 1 ou 2, **caractérisé en ce que** l'auget peut être inséré latéralement dans le guide.

4. Dispositif selon la revendication 1 ou 2, **caractérisé en ce que** l'auget peut être enfiché par le haut dans le guide.

5. Dispositif selon l'une des revendications précédentes, **caractérisé en ce que** le support d'auget, ouvert au moins d'un côté, est réalisé en forme de cuvette, les parois latérales opposées du support d'auget servant à guider et à fixer l'auget.

6. Dispositif selon l'une des revendications précédentes, **caractérisé en ce qu'**un rail de guidage allongé destiné à l'auget est disposé de préférence au fond du support d'auget, le fond de l'auget comportant un profil complémentaire adapté au rail de guidage.

7. Dispositif selon la revendication 6, **caractérisé en ce que** le rail de guidage a une section transversale en queue d'aronde.

8. Dispositif selon l'une des revendications précédentes, **caractérisé en ce que** l'auget comporte une marque distinctive (60) identifiant la forme de sa tasse et **en ce que** chaque outil de découpe ou de gaufrage adapté à la tasse est pourvu de la même marque distinctive.

9. Dispositif selon la revendication 8 comportant une commande électronique qui pilote le déplacement du support d'outil de formage (1), **caractérisé par** un premier capteur disposé sur le support d'auget, et couplé à la commande, servant à détecter la marque distinctive d'auget, ainsi que par un deuxième capteur disposé sur le support d'outil de formage, et couplé à la commande, servant à détecter la marque distinctive placée sur l'outil de découpe ou de gaufrage.

10. Dispositif selon l'une des revendications précédentes, **caractérisé en ce que** le support d'outil de formage comporte un moyen de réception servant à maintenir de manière amovible un outil de pressage ou de gaufrage.
